# EUROPEAN PATENT APPLICATION

(11) **EP 4 755 506 A1**
(43) Date of publication of application: **10.06.2026**
(21) Application number: 25221211.3
(22) Date of filing: 05.12.2025
(51) Int. Cl.: B01J 20/06, B01J 20/28, B01J 20/30, C02F 1/28, C05D 9/00, C02F 101/10

(54) **METHOD FOR THE MANUFACTURE OF IRON HYDROXIDE PELLETS**

(30) Priority: 05.12.2024 NL 2039251; 20.06.2025 NL 4000098
(71) Applicant: KWR Water B.V., 3433 PE Nieuwegein (NL); AquaMinerals B.V., 3433 PE Nieuwegein (NL)
(72) Inventor: DE WAAL, Luuk, NIEUWEGEIN (NL); CARIS, Roberta Huberta Maria, NIEUWEGEIN (NL)
(74) Representative: Algemeen Octrooi- en Merkenbureau B.V.

(57) **Abstract**

The present invention relates to a method for the manufacture of iron hydroxide pellets, comprising the drying of iron sludge and the pelleting of the dried iron sludge for the production of iron hydroxide pellets, wherein a binder is added to the dried iron sludge prior to pelleting.

## Description

The present invention relates to a method for the manufacture of iron hydroxide pellets, as well as to iron hydroxide pellets containing a binder. Furthermore, the present invention relates to the use of such iron hydroxide pellets.

In the Netherlands, drinking water is prepared primarily from groundwater and surface water, using a number of purification steps, with or without riverbank and/or dune passage. Water preparation for the production of food production, such as beer and canned vegetables and the like, and water treatment of seepage water in open-pit mines can also be mentioned here. The surface water comes from specially designated locations in the Rhine, the IJsselmeer, the Maas and the Drentsche Aa. Surface water used for the preparation of drinking water must meet separate quality requirements. The water manager ensures that the surface water meets these requirements. There can be major differences between the quality requirements for surface water, for drinking water preparation and the ecotoxicological standards for surface water.

A method for the production of an iron and/or iron oxide filtration medium is known from the Dutch patent NL2013709. The method thus known includes a step of drying of iron sludge until a dry matter content of at least 50% is obtained, and an additional step of pelleting the dried iron sludge from step (i) to obtain iron and/or iron oxide pellets. Prior to the drying of iron sludge, a binder is added to the iron sludge, namely carboxymethylcellulose (CMC).

German Offenlegungsschrift DE4104873A1 relates to a method for the production of an adsorbent for the capture of (hydrogen) sulphide from gas mixtures, in particular from biogases, wherein water sludge containing Fe(OH)₃ is subjected to grinding drying with internal classification, then mixing with binder, in particular cement, and finally the formation of the targeted grains, wherein the step of grinding, drying and classification is carried out in heated impact mills with internal classification.

A method of producing a sorptic material is known from International application WO2019129767, which involves a number of steps, namely the mixing of a first granular material, which includes iron, and a second granular material, which includes aluminium hydroxide, in order to obtain a mixture, wherein the first granular material and the second granular material are mixed in a certain proportion. The mixture thus obtained is subjected to a heat treatment at a temperature between 400°C and 950°C in order to obtain the sorptic material comprising a first phase rich in iron oxides, bound by a matrix rich in alumina.

US2002/077249 relates to process for the production of an adsorbent for the removal of arsenic compounds from water, comprising the steps of the incorporating aluminium, magnesium and/or titanium oxides or (oxy)hydroxides or ageing products and dehydrated secondary products thereof into an aqueous suspension of iron oxide and/or iron oxyhydroxide, including Fe(OH)₂, drying the suspension until it reaches a solid state and mechanically comminuting the solid material to the desired shape and/or size, or mechanically shaping the suspension, optionally in the semisolid state after predrying, followed by additional drying until a solid state is achieved.

Wet iron sludge (typical dry matter content <1% to 30%) is not easy to process and its transport requires a lot of energy due to its high-water content. Due to the poor handling, flake size and flake strength of wet iron sludge, filter applications are not possible. As explained above, iron hydroxide pellets are available, but they are deficient in a number of properties, for example in terms of one or more of the bonding capacity, compressive strength and leaching properties.

According to an article published by Royal Dutch Water Network (KNW) under the title "Iron sludge pellets from drinking water production remove phosphate", a way has been developed to granulate iron oxide, without reducing its adsorption properties, wherein the pellets thus obtained are suitable as adsorbent for the removal of phosphate from surface water or to bind phosphate in the soil. The method used involves mixing iron sludge with a single additive, namely a particular type of clay (bentonite) or a cellulose derivative (carboxymethylcellulose, CMC), and then drying and grinding. In the conventional preparation of drinking water from groundwater and surface water, iron sludge is released as a residue. The iron sludge contains iron (hydr)oxides, which can adsorb substances such as arsenic (arsenate), (hydrogen) sulphide and phosphate.

International application WO 2004/052532 relates to a method of removing heavy metals from aqueous systems, comprising contacting an aqueous system comprising a first amount of heavy metals with a media comprising ferric hydroxide made by simultaneously combining in a vessel at least one iron salt and at least one hydroxide compound, and recovering an aqueous system comprising a second amount of heavy metals, wherein the second amount is less than the first amount.

CN 109 468 457 relates to the use of iron oxide powder pellets as a coolant in steel production and/or as a coolant in vanadium extraction, wherein iron oxide powder pellets are obtained by dry-mixing pre-ground cold-rolled acid regenerated iron oxide powder, which comes from the metallurgical Industries, with a water-soluble organic binder, after which extruded iron oxide powder pellets are obtained by extrusion and drying with the addition of water.

International application WO 99/24158 relates to mineral pellet for use in iron-making processes, for example as a raw material in a direct reduction furnace operating at temperatures at most 1100 °C, or in blast furnaces or other applications wherein agglomerated raw materials are needed. Such pellets are obtained by mixing mineral concentrates or fine material with a binder formulation consisting of colloidal silica and a polymer binder to form a pellet, then the pellet is heated at a high temperature to form the mineral pellet.

CN 116 409 880 relates to a method of preparing a high-quality artificial filler for wetlands using mining waste.

CN 118 267 969 relates to a wastewater treatment process comprising the following steps of treating the wastewater by Fenton reaction after primary sedimentation, subjecting the wastewater after the Fenton reaction to adsorption and precipitation treatment, wherein at least a portion of the adsorbent in the adsorption and precipitation treatment is the composite adsorbent containing Fenton iron sludge, raw coal, waste adsorbent and binder.

A scientific paper by HAI-XIA WU ET AL: "Granulation of Fe Al Ce hydroxide nano-adsorbent by immobilization in porous polyvinyl alcohol for fluoride removal in drinking water", POWDER TECHNOLOGY, ELSEVIER, BASEL (CH), Volume 209, No. 1, February 11, 2011 (2011-02-11), pages 92-97, discloses nano-adsorbents of Fe-Al-Ce trimetal hydroxide (FAC) immobilized in porous polyvinyl alcohol (PVA) by crosslinking with boric acid. Immobilization of the nano-adsorbent in porous polyvinyl alcohol granules is seen as a granulation method for water purification in packed beds.

The present inventors have also found that, despite a high adsorption affinity for phosphate, arsenate and/or (hydrogen) sulphide, freshly formed iron (hydr)oxides cannot be used as adsorbent material in groundwater or surface water treatment because of the aforementioned morphological shortcomings, in particular permeability and contact surface.

It is therefore desirable to develop a method leading to the formation of iron hydroxide pellets in which the above-mentioned deficiencies are minimised and wherein such iron hydroxide pellets can be used on a large scale for the treatment of, inter alia, drinking water, municipal wastewater, industrial wastewater, groundwater or surface water. The aforementioned iron hydroxide pellets can also be used effectively for the removal of sulphur compounds, e.g. hydrogen sulphide, from gases.

An object of the present invention is to provide a method for the production of iron hydroxide pellets that are provided with a high adsorption capacity wherein no leaching of undesirable contaminants occurs.

Another object of the present invention is to provide iron hydroxide pellets that can be stored and transported and that are suitable for, inter alia, the removal of phosphate from, for example, open surface waters, (post-)treatment of treated sewage flows and/or well water for drinking water production.

The present invention relates to a method for the removal of one or more of phosphate, arsenate and hydrogen sulphide, for the cleaning of biogas and/or water under the use of an adsorbent, wherein as adsorbent iron hydroxide pellets comprising dried iron sludge from a water treatment process, wherein the aforementioned iron hydroxide pellets include a binder chosen from polyvinyl alcohol (PVA) and its derivatives.

One or more objects are met by the use of such a method. The iron sludge used in the present method originates, for example, from a drinking water preparation process. Other sources of sludge include organic sludge, which contains mainly organic matter, such as plant and animal remains, and is found in stagnant water, inorganic sludge, which consists mainly of mineral particles, such as clay and sand, and dredged sludge that is removed during waterway dredging. Other sources of iron sludge include water treatment processes. According to the present invention , it is also possible to use iron sludge released in open-pit mining, where ferrous groundwater is also oxidized, as a starting material for the manufacture of pellets.

The present inventors have found that the special origin of the iron sludge has a beneficial effect on the physical properties of the pellet. It is assumed, without the inventors being bound by such a theory, that the presence of natural organic matter, such as humic acids and fulvic acids in iron sludge, in the well water in water treatment processes, in particular a process for the preparation of drinking water, could potentially serve as a natural crosslinker for PVA molecules that bind the iron (hydr)oxide particles. Such bonding contributes to increasing the water resistance of the pellets, preventing elution of the PVA binding molecules. Such a bond has not been observed, for example, in other binders known according to the state of the art, including carboxymethylcellulose, bentonite, starch and polyacrylamide, so that the use of PVA molecules as a binder in iron hydroxide pellets has led to surprisingly better physical properties. In the production of drinking water from surface water, iron (e.g. FeCl₃) is usually added as a coagulant, which is then also precipitated as iron (hydr)oxide. In the production of drinking water from (bank)groundwater, iron is usually present in dissolved form in the (spring) water, which then also precipitates as iron hydroxide after adding an oxidizer (e.g. oxygen through aeration). In this way, iron sludge is formed during the production of drinking water.

Although the present invention refers to iron sludge for the production of iron hydroxide pellets, the present inventors have established that according to the present method aluminium (hydr)oxide sludge can be processed into aluminium hydroxide and/or aluminium oxide pellets, too.

According to the present invention, the iron hydroxide pellets include one or more additional components, including, for example, sequential ferrihydroxide, activated carbon, alumina, magnesium oxide, bauxite, zeolites, colloidal silica, sawdust, crude coal and activated carbon. For example, the aforementioned components can affect permeability and type of pores.

According to the present invention, the term iron hydroxide pellets means pellets comprising one or more of iron hydroxide, iron oxide and iron oxide hydroxide. A difference between iron hydroxide and iron oxide is the presence of crystal water. The term iron sludge is known by the chemical name iron(III) oxide hydrate, designated by CAS numbers 215-168-2 and 1309-37-1. A similar reasoning applies to aluminium hydroxide and/or alumina pellets.

The term 'polyvinyl alcohol (PVA) and its derivatives' also includes derivatives or derivatives of polyvinyl alcohol (PVA) or modified PVA, which include, inter alia, carboxylated PVA, i.e. introduction of carboxylic acid groups affecting adhesion and film-forming properties, silaneised PVA, i.e. introduction of silane groups affecting adhesion properties, phosphorylated PVA, i.e. introduction of adding phosphate groups affecting heavy metal adsorption, and quaternized PVA, namely introduction of quaternary ammonium groups resulting in a cationic PVA derivative, sulfonated PVA, i.e. by introducing sulfonate groups affecting hydrophilicity. Another embodiment of modified PVA is, for example, silanol modified polyvinyl alcohol, wherein the silanol group provides a high reactivity, allowing crosslinks to be formed that can, for example, bind strongly to certain surfaces, such as a glass surface.

Polyvinyl alcohol can be obtained from a combination of vinyl acetate monomer and ethylene. Depending on the ratio of the aforementioned components, it is possible that instead of a polyvinyl alcohol, an ethylene vinyl alcohol (EVOH) is also obtained. Adding ethylene monomer will make the final polymer more hydrophobic, which will increase its resistance to water and moisture and reduce its vapor permeability ("Water Vapor Transmission Rate (WVTR)"). Polyvinyl alcohol can also be understood as a polymer of VAM (Vinyl Acetate Monomer). An iron hydroxide pellet based on such a binder is particularly suitable for use in aqueous environments.

According to an example, the applied binder is applied as an aqueous solution, wherein the aqueous solution includes a binder, comprising polyvinyl alcohol (PVA) and/or derivatives thereof.

According to another example, there is also dry mixing of iron hydroxide with binder followed by wet mixing.

According to an example, polyvinyl alcohol (PVA) has a (polymer) chain length, expressed in the average molecular weight, in a range of 5-250 kDa, i.e. 5,000-250,000 grams/mol, measured by Gel Permeation Chromatography (GPC). Another way to express the (polymer) chain length of polyvinyl alcohol (PVA) is the viscosity, wherein the viscosity is in a range of 1 - 110 mPa*s, measured via a falling ball viscometer (Höppler) of a 4 wt.% aqueous PVA solution at 20°C (DIN 53015). If the (polymer) chain length is outside the aforementioned range, the iron hydroxide pellets obtained show deficiencies with regard to one or more of biodegradability, compression strength and wear resistance.

In the present method polyvinyl alcohol (PVA) is used as a solution. According to an example, an aqueous solution of polyvinyl alcohol (PVA) is used in which the polyvinyl alcohol (PVA) content is in a range of 0.1 - 50 wt.%. Such a solution of polyvinyl alcohol (PVA) is preferably pumpable.

According to the present method a mixture of binder and the dried iron sludge is produced, wherein the amount of polyvinyl alcohol (PVA) in the mixture thus prepared is at least 0,01 % by weight, preferably at least 0,1 % by weight and at most 35 % by weight, preferably at most 6 % by weight, wherein the percentage by weight is calculated on the basis of the total mass of polyvinyl alcohol (PVA) in the mixture.

According to an example, polyvinyl alcohol (PVA) has a hydrolysis degree in a range of at least 50%, preferably at least 70% and at most 99.99%, preferably at most 99.9%, measured by a method chosen from titration (EN ISO 3681) and near infrared (NIR) analysis. If the degree of hydrolysis is outside the aforementioned range, the iron hydroxide pellets to be obtained will have shortcomings with regard to mechanical strength and/or stability in moist and/or aqueous environments.

According to an example, the binder is a polyvinyl alcohol (PVA) wherein a 4 wt.% aqueous PVA solution at 20°C (DIN 53015) has a viscosity of 3.9 - 51.9 mPa*s (average molecular weight in a range of 33 - 137 kDa, i.e. approximately 33,000 - 137,000 grams/mol) and a hydrolysis degree of >97.9%).

According to another example, the binder is a polyvinyl alcohol (PVA) wherein a 4 wt.% aqueous PVA solution at 20°C (DIN 53015) has a viscosity of 12.4 - 30.1 mPa*s (average molecular weight in a range of 51 - 90 kDa, i.e. approximately 51,000 - 90,000 grams/mol) and a hydrolysis degree of >97.9%.

According to another example, the binder is a polyvinyl alcohol (PVA) wherein a 4 wt.% aqueous PVA solution at 20°C (DIN 53015) has a viscosity of 12.4 - 21.6 mPa*s (average molecular weight in a range of 51 - 72 kDa, i.e. approximately 51,000 - 72,000 grams/mol) and a hydrolysis degree of >97.9%.

According to another example, the binder is a polyvinyl alcohol (PVA) wherein a 4 wt.% aqueous PVA solution at 20°C (DIN 53015) has a viscosity of 18.4 - 21.6 mPa*s (average molecular weight in a range of 64-72 kDa, i.e. approximately 64,000 - 72,000 grams/mol) and a hydrolysis degree of >97.9%.

According to another example, the binder is a polyvinyl alcohol (PVA) wherein a 4 wt. % aqueous PVA solution at 20°C (DIN 53015) has a viscosity of 12.4 - 17.6 mPa*s (average molecular weight approximately 52-63 kDa, i.e. in a range of 52,000 - 63,000 grams/mol) and a hydrolysis degree of >98.9%.

According to an example of the present method the step of drying iron sludge involves the thermal drying of iron sludge in order to obtain iron sludge with a dry matter content in a range of at least 30 % by weight, preferably at least 40 wt.% and at most 99.9 wt.%, preferably at most 99 wt.%.

According to an example of the present method the step of thermal drying of iron sludge is carried out at a temperature not exceeding 107 °C, preferably at most 60 °C, in particular at most 45 °C, in particular preferably at most 25 °C, for a period of at most 5 hours, preferably at most 39 hours, in particular a maximum of 72 hours, in particular preferably a maximum of 336 hours.

An example of thermal drying is spray drying that is carried out, for example, in a temperature range of 150-250°C.

The present inventors have found that thermal drying can take place under different process conditions, in particular at a temperature of, for example, 250°C for a maximum of 5 seconds, 200°C for a maximum of 20 seconds, 150°C for a maximum of 1 hour, 130°C for a maximum of 2 hours, 120°C for a maximum of 3 hours, 107°C for a maximum of 5 hours, 60°C for a maximum of 39 hours, 45°C for a maximum of 72 hours and 25°C for a maximum of 336 hours.

Although not bound by any scientific explanation, the present inventors assume that freshly formed iron (hydr)oxides have a specific surface range that is larger than the more crystalline forms of iron (hydr)oxides. By maintaining the temperature in the aforementioned range during the thermal drying of iron sludge, the adsorption capacity is optimally maintained. According to an example, a step of mechanical thickening of the wet sludge is followed by a step of thermal drying at a low temperature, e.g. <80 °C, until a dry matter content of e.g. 55% is reached, so that the resulting starting material is suitable for obtaining the intended pellets.

The step of drying iron sludge can also be carried out by mechanical drying, wherein the sludge is forced through filters under high pressure to remove water, or wherein sludge is hurled into a rapidly rotating drum to separate water. For thermal drying, for example, rotary drum dryers, belt dryers or flash dryers are used, which use hot air flows for a short time. Other drying methods include heating, vacuum storage, spray drying, spin flash drying, desiccation, the use of microwaves, vacuum ovens, precision deposition techniques such as a multi-dimensional printer, actively dehumidified air (recirculation), residual heat and solar radiation.

For example, drying is accomplished using a combination of thermal drying and one or more of the drying techniques mentioned above.

According to an example, the present method also includes a step of crushing the dried iron sludge. However, it is also possible that the dried iron sludge already has the desired particle size, so that such a step of grinding can be dispensed with, as is the case with thermal drying by the technique of spray drying. It is important that the dried iron sludge is suitable in terms of physical size and handling to both absorb the binder solution in a dispersed manner and to serve as a starting material for granular formation.

If a step of grinding the dried iron sludge takes place, then according to an example the dried iron sludge is ground to a grain size in a range of at least 0.05 mm, preferably at least 0,1 mm and at most 10 mm, preferably at most 0,5 mm.

According to an example, after a step of mechanical dewatering, the sludge has a dry matter content in a range of, for example, 30% by weight - 40% by weight, based on the weight of the dewatered sludge. After a step of spray drying, a fine powder with a powder size between 3µm and 450µm (with a D50 value of approximately 20-30µm) is obtained.

According to an example, granules comprising iron sludge and binder are obtained after spray drying that have a powder size in a range of 0.001 mm - 1 mm, preferably in a range of 0.002 mm - 0.1 mm.

According to an example of the present method an additional amount of dried iron sludge is added to the mixture of binder solution and dried iron sludge during pelleting. In the pelleting step, according to an example, the mixture of binder solution and dried iron sludge is pelleted to a grain size in a range of at least 0.25 mm, preferably at least 1 mm and at most 100 mm, preferably at most 4 mm.

Pelleting methods which may be used in the present invention include roll presses, briquettors, extruders and pan or dish agglomerators. For pan and dish granulation (pellet platter), it is desirable that the pressure exerted on the pellet is minimal compared to the pelletizing methods mentioned above, which can be beneficial for the porosity and thus adsorption capacity of the pellets. Another example of granule formation includes the use of a high impact mixer, wherein powder particles are hurled against each other in a rotating gas stream, causing granular formation.

According to an embodiment the iron hydroxide pellets formed after pelleting are subjected to particle size separation, in particular in a range of 0,25 to 100 mm, preferably in a range of 1 to 4 mm, wherein iron hydroxide pellets with a particle size greater than that range are subjected to a grinding step, in particular the iron hydroxide pellets thus crushed are returned to the pelleting step, and wherein iron hydroxide pellets with a particle size smaller than the aforementioned range are returned to the pelleting step.

According to an example of the present method pelleting is terminated when the iron hydroxide pellets thus formed have a size of at least 0,25 mm.

According to an example, the pellets thus obtained are dried, for example, for a period of at least 24 hours in air at ambient temperature, for example 15-20°C. A dry surface is beneficial for transporting pellets. The present inventors have also found that there must be sufficient time for PVA to cross-link. Although crosslinker activity is already noticeable after a period of 30 minutes, a longer period, for example at least 24 hours, shows a more complete crosslinking.

The present invention also relates to iron hydroxide pellets containing a binder, wherein the binder has been chosen from polyvinyl alcohol (PVA) and its derivatives.

The term 'pellets' used here includes not only granular products but also rod-shaped and rectangular shapes. However, the external form is in no way limited to granular or spherical shapes.

The term "iron hydroxide" used in the present invention includes not only iron hydroxide but also iron oxide and iron oxide hydroxide.

According to an example, the iron hydroxide pellets have a collective compression strength in a range of 0.25 - 5.10 Newtons per square millimetre, measured according to the method described below. If the compressive strength is outside the aforementioned range, the iron hydroxide pellets to be obtained will have shortcomings with regard to the suitability for packaging, transport and potentially also the final use, for example, in filter applications where - during rinses - friction will arise between grains, which can cause them to wear out at too low a strength and/or be pressed under their own weight when they are used in a filter bed of typically a few centimetres to a few metres in height.

A suitable method for determining the compressive strength is described below. Pellets of iron hydroxide are air-dried to a constant weight. Then the pellets are sieved at a fraction of 0.25 - 100 mm, preferably in a range of 1-4 mm, in particular a 1-2 mm fraction, which fraction is transferred to a hollow metal cylinder with a metal bottom (internal diameter: 32 mm) with a filling height of 30 mm. A metal rod is then pressed down 6 mm into the cavity of the cylinder at a speed of 3 mm/min. The force required to achieve this compression to 80% of the original volume is measured. Dividing the force required over the surface of the cylinder gives the collective compression strength in Newtons/mm2 (at 20% compression).

According to an example, the iron hydroxide pellets have a theoretically calculated maximum phosphate adsorption capacity in a range of 75-650 g of phosphate (as PO₄) per kilogram of iron (hydr)oxide present in the pellets, measured on the basis of Langmuir Adsorption isotherms at 20 degrees Celsius, expressed in grams of PO₄ per kilogram of iron (hydr)oxide present in the pellets. If the theoretically calculated maximum phosphate adsorption capacity lies outside the aforementioned range, then the iron hydroxide pellets obtained ultimately show shortcomings with regard to the removal of phosphate by adsorption from a phosphate-containing environment and/or dust stream in which the presence of phosphate is undesirable. Moreover, if the adsorption capacity of phosphate falls below the lower limit mentioned, the concentration of phosphate on the pellets is so low that recovery of phosphate from the granules for reuse is not easy.

According to an example, the iron hydroxide pellets have a practice-measured phosphate adsorption capacity, wherein this means the phosphate adsorption capacity of pellets in equilibrium with a phosphate-containing solution, in a range of 5-100 g of phosphate (as PO₄) per kilogram of iron (hydr)oxide present in the pellets, measured on the basis of Pseudo Second-Order Kinetics experiments at 20 degrees Celsius. Phosphates can be present in watercourses, for example, and by use of the present pellets, it is possible to bind such phosphates to the pellets.

According to an example, the iron hydroxide pellets possess a theoretically calculated maximum arsenate adsorption capacity in a range of 100-950,000 mg arsenic (as arsenate) per kilogram of iron (hydr)oxide present in the pellets, measured on the basis of Langmuir Adsorption isotherms at 20 degrees Celsius, expressed in milligrams As per kilogram of iron (hydr)oxide present in the pellets. If the arsenate adsorption capacity is outside the aforementioned range, then the iron hydroxide pellets to be obtained ultimately show shortcomings with regard to the removal of arsenic by adsorption from an arsenic-containing environment and/or dust stream in which the presence of arsenic is undesirable.

According to an example, the iron hydroxide pellets have a (hydrogen) sulphide adsorption capacity in a range of 125-525 g (hydrogen) sulphide per kilogram of iron (hydr)oxide present in the pellets, measured on the basis of the breakthrough curve of the aforementioned pellets in a column experiment, expressed in grams of H₂S per gram of iron (hydr)oxide present in the pellets. If the (hydrogen) sulphide adsorption capacity is outside the aforementioned range, then the iron hydroxide pellets obtained ultimately show shortcomings with regard to the removal of (hydrogen) sulphide by means of adsorption from an environment containing (hydrogen) sulphide, gas flow and/or substance flow in which the presence of (hydrogen) sulphide is undesirable.

Iron hydroxide pellets as discussed above may have any of the above properties, or a combination of two or more properties.

The present invention also relates to the use of iron hydroxide pellets obtained by a method as discussed above or iron hydroxide pellets as discussed above as a filtration medium for cleaning biogas and/or (waste) water.

The iron hydroxide pellets according to the present invention are thus to be regarded as adsorbent that are not only suitable for the removal of heavy metals, for example arsenic, but can also be used to positively influence the taste, colour and smell of aqueous streams. Iron hydroxides can remove not only arsenic but also vanadium, lead, cadmium, zinc, copper, chromium and mercury from an aqueous stream. According to the present invention, iron hydroxide pellets can also be used in the desulphurization of biogas or the binding of phosphate in watercourses, or the purification of wastewater containing heavy metals, such as cyanide.

The present invention also relates to the use of iron hydroxide pellets obtained by a method as discussed above or iron hydroxide pellets as discussed above as a soil improver in agriculture and horticulture. The term soil improver should also be understood to mean fertilizer.

The present invention will be explained below on the basis of a number of examples that serve only to illustrate the invention.

In the examples, iron sludge from drinking water production was used. Sludge thus settled, with a dry matter content of 0.01-20 % by weight, was further thickened, if necessary, under the use of a mechanical thickening apparatus to a final dry matter content of 20-40%.

### Example 1

The resulting iron sludge (from Vitens' Pannenburg production site) was subjected to thermal drying at a temperature of 60 °C for 39 hours until a dry matter content of 60 % was reached. A binder solution of 4 wt.% PVA (viscosity 18.5-21.5 mPa*s, hydrolysis degree 97.9%, average molecular weight in a range of 64-72 kDa or 64,000 - 72,000 grams/mol) was prepared at a temperature of 90 °C and added in a quantity of 0.5 wt.% to the iron sludge thus dried. Pellets were then obtained by applying the mixture thus prepared to a pellet dish. After the cores had reached a size of about 1-2 mm, the pelleting step was completed. The pellets thus obtained were air-dried to a constant weight and sieved to the desired fraction. The collective compression strength (N/mm²) was approximately 1.4 - 1.7, wherein the measured adsorption capacity (g PO₄/kg iron (hydr)oxide in the pellets) had a value in a range of 75-650.

### Example 2

The same operations as in Example 1 were repeated, except that the thermal drying was carried out at a temperature of 1050 °C for 1 minute, wherein a heating rate of 200 °C per hour was applied.

### Example 3

The same operations as in Example 1 were repeated, except that the thermal drying was carried out at a temperature of 500 °C for 1 hour.

### Example 4

The same operations as in Example 1 were repeated, except that the thermal drying was carried out at a temperature of 300 °C for 1 hour.

### Example 5

The same operations as in Example 1 were repeated, except that the thermal drying was carried out at a temperature of 107 °C for 5 hours.

### Example 6

The same operations as in Example 1 were repeated, except that the thermal drying was carried out at a temperature of 90 °C for 24 hours.

### Example 7

The same operations as in Example 1 were repeated, except that the thermal drying was carried out at a temperature of 45 °C for 72 hours.

### Example 8

The same operations as in Example 1 were repeated, except that the thermal drying was carried out at a temperature of 30 °C for 96 hours.

### Example 9

The same operations as in Example 1 were repeated, except that the thermal drying was carried out at a temperature of 25 °C for 336 hours.

### Example 10:

The same operations as in Example 1 were repeated, except that a binder solution of 4 wt.% PVA (average molecular weight in a range of 32-34 kDa, i.e. 32,000-34,000 grams/mol, viscosity 3-4 mPa*s and a hydrolysis degree ≥98.9%) was prepared.

### Example 11

The same operations as in Example 1 were repeated, except that a binder solution of 4 wt.% PVA (molecular weight 146-186 kDa, viscosity 62-72 mPa*s and a hydrolysis degree ≥ 98.9%) was prepared at room temperature.

### Example 12

The same actions as in Example 1 were repeated, except that iron sludge from another drinking water production location (from surface water treatment) was used.

### Example 13

The same operations as in Example 1 were repeated, except that a different binder solution was used, namely a binder solution of 10 wt.% Portland cement.

### Example 14

The same operations as in Example 1 were repeated, except that a different binder solution was used, namely a binder solution of 1 wt.% carboxymethylcellulose.

### Example 15:

The same operations as in Example 1 were repeated, except that the thermal drying was carried out by spray drying at a temperature of 200 °C for 20 seconds to a dry matter content of >90%.

### Example 16:

The same operations as in Example 1 were repeated, except that a binder solution of 4 wt.% PVA (average molecular weight in a range of 136-154kDa, i.e. 136,000-154,000 grams/mol, viscosity 52-60 mPa*s and a hydrolysis degree >97.9% (98.0%-98.8%) ) was prepared at room temperature.

### Example 17:

The same operations as in Example 1 were repeated, except that a binder solution of 4 wt.% PVA (average molecular weight in a range of 52-63kDa, i.e. 52,000-63,000 grams/mol, viscosity approximately 12.5-17.5 mPa*s and a hydrolysis degree >98.9% (99.0%-99.8%) ) was prepared at room temperature.

In the table below, the iron hydroxide pellets obtained from Examples 1-17 are compared in terms of compressive strength and theoretically calculated maximum phosphate adsorption capacity. The table compares the measured values with the values measured for Example 1. Thus, a score of "0" means a result equivalent to Example 1, a score of "-" a result lower than Example 1, and a score of "+" a result higher than Example 1.

**Table 1: Collective compression strength for Examples 1-17**

| Example | Collective compression strength (N/mm²) | Theoretically calculated maximum adsorption capacity (g PO₄/kg iron hydroxide in pellets) |
|---|---|---|
| 1 | 1,4 - 1,7 | 75 - 650 |
| 2 | 0 | - |
| 3 | 0 | - |
| 4 | 0 | - |
| 5 | 0 | 0 |
| 6 | 0 | 0 |
| 7 | 0 | 0 |
| 8 | 0 | 0 |
| 9 | 0 | 0 |
| 10 | -/0/+ | - |
| 11 | -/0 | 0 |
| 12 | 0 | -/0/+ |
| 13 | -/0/+ | - |
| 14 | - | -/0 |
| 15 | -/0 | 0 |
| 16 | -/0 | -/0/+ |
| 17 | 0/+ | -/0/+ |

It is clear from Table 1 that
- there is a relationship between the thermal drying temperature and the drying time, where a low drying temperature and a short drying time lead to retention of the adsorption capacity of the iron (hydr)oxide in the pellets (Examples 2-9, in particular Examples 2-4),
- too low a viscosity of the binder during the pelleting step affects the absorption capacity (Example 10),
- too high a viscosity of the binder during the pelleting step affects the compression strength of the pellets (Examples 11 and 16),
- the local conditions at the drinking water production site where the iron sludge comes from affect the adsorption capacity of the pellets (Example 12),
- the use of an inorganic binder, namely Portland cement, affects the adsorption capacity and compression strength of the pellets (Example 13),
- the use of another organic binder, carboxymethylcellulose, affects the adsorption capacity and compression strength of the pellets (Example 14),
- the use of spray drying as the drying method affects the compression strength (Example 15),
- a higher degree of hydrolysis of the binder during the pelleting step affects the compression strength of the pellets (Example 17).

## Claims

1. A method for the removal of one or more of phosphate, arsenate and hydrogen sulphide, for the cleaning of biogas and/or water under the use of an adsorbent, wherein as adsorbent iron hydroxide pellets comprising dried iron sludge from a water treatment process, wherein the aforementioned iron hydroxide pellets include a binder chosen from polyvinyl alcohol (PVA) and its derivatives.

2. A method for the manufacture of iron hydroxide pellets as applied in claims 1, comprising the drying of iron sludge and the pelleting of the dried iron sludge for the production of iron hydroxide pellets, wherein a binder is added to the dried iron sludge prior to pelleting, wherein the binder is chosen from polyvinyl alcohol (PVA) and its derivatives.

3. A method according to claim 2, wherein the binder is applied as an aqueous solution in which the polyvinyl alcohol (PVA) content is in a range of 0.1 - 50 wt. %.

4. A method according to one or more of claims 1-3, wherein polyvinyl alcohol (PVA) has an average molecular weight in a range of 5 -250 kDa, i.e. 5,000-250,000 grams/mol, measured by Gel Permeation Chromatography (GPC).

5. A method according to one or more of claims 1-4, wherein polyvinyl alcohol (PVA) has a viscosity in a range of 1 - 110 mPa*s, measured by a falling ball viscometer (Höppler) of a 4 wt.% aqueous PVA solution at 20°C (DIN 53015).

6. A method according to one or more of claims 1-5, wherein polyvinyl alcohol (PVA) has a hydrolysis degree in a range of at least 50%, preferably at least 70% and at most 99.99%, preferably at most 99.9%, measured by a method chosen from titration (EN ISO 3681) and near infrared (NIR) analysis.

7. A method according to one or more of the preceding claims, wherein the step of drying iron sludge involves the thermal drying of iron sludge in order to obtain iron sludge with a dry matter content in a range of at least 30 % by weight, preferably at least 40 % by weight and at most 99,9 % by weight, preferably at most 99 % by weight, wherein particular the step of thermal drying of iron sludge is carried out at a temperature not exceeding 107 °C, preferably at most 60 °C, in particular at most 45 °C, in particular preferably at most 25 °C, for a period of at most 5 hours, preferably at most 39 hours, in particular at most 72 hours, in particular preferably at most 336 hours.

8. A method according to one or more of the preceding claims, further comprising a step of grinding the dried iron sludge, wherein in particular the dried iron sludge is ground to a grain size of at least 0,05 mm, preferably at least 0,1 mm and at most 10 mm, preferably at most 0,5 mm.

9. A method according to one or more of the preceding claims, wherein said water treatment process is a process for the preparation of drinking water, wherein the dried iron sludge includes natural organic matter, such as humic acids and fulvic acids.

10. Iron hydroxide pellets containing a binder wherein the binder is chosen from polyvinyl alcohol (PVA) and its derivatives.

11. Iron hydroxide pellets according to claim 10, wherein said iron hydroxide pellets have a collective compression strength in a range of 0.25 - 5.10 Newtons per square millimetre, measured according to the method described herein.

12. Iron hydroxide pellets according to one or more of claims 10-11, wherein said iron hydroxide pellets have a theoretically calculated maximum phosphate adsorption capacity in a range of 75-650 g phosphate (as PO₄) per kilogram of iron (hydr)oxide present in the pellets, measured on the basis of Langmuir Adsorption isotherms at 20 degrees Celsius, expressed in grams of PO₄ per kilogram of iron (hydr)oxide present in the pellets.

13. Iron hydroxide pellets according to one or more of claims 10-12, wherein said iron hydroxide pellets have a theoretically calculated maximum arsenate adsorption capacity in a range of 100-950,000 mg arsenic (as arsenate) per kilogram of iron (hydr)oxide present in the pellets, measured on the basis of Langmuir Adsorption isotherms at 20 degrees Celsius, expressed in milligrams As per kilogram of iron (hydr)oxide present in the pellets.

14. Iron hydroxide pellets according to one or more of claims 10-13, wherein said iron hydroxide pellets have a (hydrogen) sulphide adsorption capacity in a range of 125-525 g (hydrogen) sulphide per kilogram of iron (hydr)oxide present in the pellets, measured on the basis of the breakthrough curve of the aforementioned pellets in a column experiment, expressed in grams of H2S per kilogram of iron (hydr)oxide present in the pellets.

15. The use of iron hydroxide pellets obtained by a method according to one or more of claims 2-9 or iron hydroxide pellets according to one or more of claims 10-14 as a soil improver in agriculture and horticulture.
